Europäisches Patentamt

European Patent Office

Office européen des brevets

(11) Publication number: 0 367 322
A1

## EUROPEAN PATENT APPLICATION

(21) Application number: 89202568.5

(22) Date of filing: 11.10.89

(51) Int. Cl.5: C09K 3/14

(30) Priority: 24.10.88 IT 2240688

(43) Date of publication of application:
09.05.90 Bulletin 90/19

(84) Designated Contracting States:
AT BE CH DE ES FR GB GR LI LU NL SE

(71) Applicant: GABI S.r.l.
Via Canova 29
I-36016 Thiene Vicenza(IT)

(72) Inventor: Lucchesi, Mario
Via Fdm Duodo S. Marco 2506
I-30124 Venezia(IT)
Inventor: Costantini, Giovanni
Via Tevere 22
I-36016 Thiene Vicenza(IT)

(74) Representative: Appoloni, Romano et al
Ing. Barzanò & Zanardo S.p.A. Via
Borgonuovo 10
I-20121 Milano(IT)

(54) Composition suitable for being transformed into shaped articles by means of a moulding process, in order to obtain products suitable for polishing hard materials, such as glass, ceramic, hard stones; moulding process; so obtained articles and polishing method using them.

(57) The object of the invention is a composition suitable for being transformed into shaped articles by means of a moulding process, in order to obtain shaped products suitable for polishing and smoothing hard materials such as glass, ceramic, hard stones and the like, characterized in that it comprises cerium oxide and one or more resins selected from among the following resins: phenol resin, melamine resin, acetal resin, epoxy resin, polyurethane resin, alkyd resin, polyester resin, either in their pristine state, or modified.

The invention relates also to the process of moulding of said compositions; to the products obtained by means of said process; and to the polishing method using such products.

EP 0 367 322 A1

# COMPOSITION SUITABLE FOR BEING TRANSFORMED INTO SHAPED ARTICLES BY MEANS OF A MOULDING PROCESS, IN ORDER TO OBTAIN PRODUCTS SUITABLE FOR POLISHING HARD MATERIALS, SUCH AS GLASS, CERAMIC, HARD STONES; MOULDING PROCESS; SO OBTAINED ARTICLES AND POLISHING METHOD USING THEM

The object of the present invention is a composition to be applied in particular onto smoothing heads for polishing such hard materials as glass, ceramic, granite, quercites, sierrites and still other hard stones.

Until 10 years ago, the polishing of stony products was carried out by means of single-head, hand-operated machines. On such machines, the polishing is carried out with felt plates, inside which thin lead sheets are inserted. During the processing, in order to facilitate the polishing operation, a powder consisting of zinc oxide blended with tin oxide is manually added.

The main problem which affects said method consists in its poor productivity, with a large consumption of materials, and with an absolute dependence on the sensitivity of the operator.

During the past 10 years, a technique of polishing has been mostly used, which resorts to automatic belt machines. In this case, the felt is used as the means for dragging a fine powder, called "potè", which is constituted by 99% of tin oxide. This powder is charged to a mixer and is diluted with water, in order to be subsequently automatically distributed -- in such a water-diluted form -- onto the material to be polished.

In this case, the problems derive from the fact that the machines equipped with the "potè"-mixing device show a trend to get jammed. The fluidity of the liquid and the homogeneity of the mixture have to be kept always controlled, in that very often jammings occur, which are caused by the low fluidity of the product. Furthermore, this drawback obviously causes continuous interventions for machine cleaning and maintenance.

In case of polishing of lenses for optical use, resorting to cerium oxide as the polishing agent -- diluted in water and applied by spraying onto the glass material to be polished -- is also known. Such an use suffers from the hereinabove reminded drawbacks, and above all, a considerable difficulties have to be coped with in order to control the amount of product to be applied.

The present Applicant has surprisingly found now, and this is the object of the present invention, that the polishing of the hard materials in question can be very efficaciously accomplished by means of a composition suitable for being transformed into shaped articles by means of a moulding process, in order to obtain shaped products suitable for polishing and smoothing hard materials such as glass, ceramic, hard stones and the like, characterized in that it comprises cerium oxide and one or more resins selected from among the following resins: phenol resin, melamine resin, acetal resin, epoxy resin, polyurethane resin, alkyd resin, polyester resin, either in their pristine state, or modified.

Such a composition is suitable for being moulded in order to produce pieces endowed with polishing, abrasive and smoothing properties for hard materials, in which cerium oxide can be released as the polishing agent in a controlled way, with very efficacious polishing effects being obtained, without undergoing any of the above reminded drawbacks relating to the prior art.

In order to be used, the composition according to the present invention is processed as follows: in a suitable mixer, cerium oxide powder is blended with one or more of the above said resin(s), and possibly with further suitable additives or substances. The so obtained blend is charged to a mould and is moulded by heating and compression. During this step the polymerization of the resin takes place.

The polymerization temperature may be different for different resins, and is preferably selected within the range of from 40 to 200° C. The moulding pressure can be suitably selected within the range of from 50 to 1,000 kg/cm$^2$.

In order to better unerstand the characteristics and the advantages of the present invention, some examples of practical embodiment thereof are reported in the following. In no way such examples should be regarded as being limitative of the same invention.

The Examples from 1 to 6 relate to a same number of compositions according to the present invention.

Examples 7 and 8 relate to the preparation and treatment of other compositions according to the present invention.

## Example 1

- Cerium oxide from 20% to 80%;
- Phenol resin from 10% to 50%;
- Melamine resin from 10% to 50%.

## Example 2

- Cerium oxide from 20% to 80%;
- Phenol resin from 10% to 60%;

### Example 3

- Cerium oxide from 20% to 80%,.
- Melamine resin from 10% to 60%.

### Example 4

- Cerium oxide from 20% to 80%;
- Phenol resin from 10% to 60%;
- Silicon carbide from 5% to 50%;
- Corundum from 5% to 50%.

### Example 5

- Cerium oxide from 20% to 80%;
- Melamine resin from 10% to 60%;
- Silicon carbide from 5% to 50%;
- Corundum from 5% to 50%.

### Example 6

- Cerium oxide from 20% to 80%;
- Phenol resin from 10% to 50%;
- Melamine resin from 10% to 50%;
- Silicon carbide from 5% to 50%;
- Corundum from 5% to 50%.

### Example 7

The following composition is prepared: 22% of phenol resin + 78% of cerium oxide at 90%.

Said components are mixed with each other in a suitable mixer for about one hour. The obtained blend is charged to a baking mould with press for moulding thermosetting resins. Baking time: about 30 minutes, at the constant temperature of 175° C.

### Example 8

The following composition is prepared: 28% of melamine resin + 72% of cerium oxide at 90%.

Said components are mixed with each other in a tridimensional mixer for about one hour. The obtained blend is charged to a baking mould with press for moulding thermosetting resins. Baking time: about 25 minutes, at the constant temperature of 150° C. During the baking, the moulds are suitably degassed.

The composition according to the present invention can be moulded into the most different shapes, such as into a cylindrical shape, a cubic shape, a trapezoidal shape, and so forth.

In order to be used as a polishing element for polishing hard materials, the so moulded piece can be suitably fastened to serve as a shoe on a polishing/smoothing machine equipped with a faceplate mounted on swinging and revolving supports. For instance, a plurality of shoes obtained by means of the moulding of the composition according to the present invention is fastened in a sunburst arrangement on the faceplate of such a kind of machines machines.

The revolutionary and swinging movement of said faceplate enables the shoes fastened onto it to polish and smooth the materials to be preocessed, in the most efficacious way.

The shoes obtained from the compositions according to the present invention have been shown to be endowed with a very high polishing power, and considerably enhanced as compared to the means known from the prior art, which have been used heretofore for the intended purpose.

According to a further form of practical embodiment of the invention, a composition as hereinabove defined can additionally include a pigment or a dye, which will be suitably selected of the basis of the colour of the material to be polished with the shoe obtained from that particular composition.

In that way, the polishing will be further improved, in that the pores of the material to·be polished will be substantially filled with the pigment contained in the composition, and with the same material filled with the dye, which are partially released during the polishing process.

## Claims

1. Composition suitable for being transformed into shaped articles by means of a moulding process, in order to obtain shaped products suitable for polishing and smoothing hard materials such as glass, ceramic, hard stones and the like, characterized in that it comprises cerium oxide and one or more resins selected from among the following resins: phenol resin, melamine resin, acetal resin, epoxy resin, polyurethane resin, alkyd resin, polyester resin, either in their pristine state, or modified.

2. Composition according to claim 1, characterized in that it comprises a pigment and/or a dye.

3. Composition according to claim 1, characterized in that it comprises other suitable components, such as silicon carbide, corundum or still other organic or inorganic compounds.

4. Product, such as a shoe for polishing machines, suitable for polishing hard materials, such as glass, ceramic, hard stones and still others, characterized in that it is obtained by means of the moulding of the composition according to one or more of the preceding claims.

5. Process for obtaining a product according to claim 4, characterized in that it comprises the following steps: preparation of a blend of cerium oxide with one or more of the above said resins, and with other possible components, such as pigments, bridging substances, plasticizers, extending solubilizers; moulding by sintering or polymerization under controlled conditions of temperature and pressure.

6. Process according to claim 5, characterized in that the baking temperature is comprised within the range of from 40 to 200°C.

7. Process according to claim 4, characterized in that the moulding pressure is comprised within the range of from 50 to 1,000 kg/cm$^2$.

8. Method for polishing and smoothing such hard materials as glass, ceramic, hard stones and the like, characterized in that the surfaces of said materials are treated with one or more product(s) according to claim 4.

9. Method according to claim 8, characterized in that said products are installed in order to act as shoes on the faceplate of a polishing machine.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DERWENT FILE SUPPLIER WPIL, Derwent Publications, Ltd, London, GB; & JP-A-61 192 480 (KANEBO) 27-08-1986 * Abstract * | 1,3,5,8 | C 09 K 3/14 |
| Y | DERWENT FILE SUPPLIER WPIL, Derwent Publications, Ltd, London, GB; & JP-A-62 251 078 (KANEBO) 31-10-1987 * Abstract * | 1,3,5,8 | |
| A | PATENT ABSTRACTS OF JAPAN, vol. 10, no. 182 (C-356)[2238], 25th June 1986; & JP-A-61 28 573 (MITSUBISHI MINING & CEMENT CO., LTD) 08-02-1986 * Abstract * | 1 | |

TECHNICAL FIELDS SEARCHED (Int. Cl.5)

C 09 K
B 24 D

The present search report has been drawn up for all claims

| Place of search | Date of completion of the search | Examiner |
|---|---|---|
| THE HAGUE | 08-02-1990 | NICOLAS H.J.F. |